# EUROPÄISCHE PATENTSCHRIFT

(11) **EP 2 589 458 B1**
(45) Veröffentlichungstag und Bekanntmachung des Hinweises auf die Patenterteilung: **06.08.2014**
(21) Anmeldenummer: 11188066.2
(22) Anmeldetag: 07.11.2011
(51) Int. Cl.: B23K 26/14

(54) **Düsenaufnahme, Düsenwechsler und Laserbearbeitungsmaschine**
Nozzle holder, nozzle changer and laser processing machine
Espace de rangement de buses, dispositif d'échange de buses et machine de traitement au laser

(43) Veröffentlichungstag der Anmeldung: 08.05.2013
(73) Patentinhaber: Trumpf Maschinen AG, 6341 Baar (CH)
(72) Erfinder: Tweitmann, Mathias, 8820 Wädenswil (CH); Gisler, Adrian, 6340 Baar (CH)
(74) Vertreter: Kohler Schmid Möbus

(56) Entgegenhaltungen:
- EP-A1- 2 078 583
- EP-A2- 1 602 439
- DE-A1-102010 027 247
- DE-C1- 10 056 330
- JP-A- 10 006 062
- US-A- 3 604 565

## Beschreibung

Die vorliegende Erfindung betrifft eine Düsenaufnahme für einen Düsenwechsler zur Montage und/oder zur Demontage von Düsen an einem Bearbeitungskopf einer Laserbearbeitungsmaschine, der einen Düsenlagerraum umfasst, der sich in einer Düsen-Entnahme-Richtung zu einer Düsen-Entnahme-Öffnung hin erweitert, sowie einen Düsenwechsler mit einer Mehrzahl von Düsenaufnahmen und eine Laserbearbeitungsmaschine mit einem solchen Düsenwechsler.

Eine solche Vorrichtung zur Montage/Demontage von Laserdüsen mit einer Mehrzahl von Düsenaufnahmen ist aus der DE 100 56 330 C1 bekannt. Auch die EP 2 078 584 A1 beschreibt eine Vorrichtung zur Montage/Demontage von Laserdüsen mit einer Mehrzahl von Düsenaufnahmen.

Laserdüsen, die zur Durchführung eines Bearbeitungsprozesses an einem Bearbeitungskopf einer Laserbearbeitungsanlage angebracht werden, können durch Kollisionen mit Werkstückteilen, Spritzern und Verschmutzungen aus dem Bearbeitungsprozess verunreinigt oder beschädigt werden. Bei Laserdüsen handelt es sich somit um Verbrauchsteile, die aus Gründen der Prozesssicherheit regelmäßig gewechselt werden sollten. Ein Wechsel der Düsen ist auch bei beim Wechsel der Materialart bzw. Materialdicke des Werkstücks und bei der Durchführung von neuen Bearbeitungsstrategien, wie beispielsweise dem 2D-Laserschneiden mit Spiegelschneidkopf und/oder mit Wasserkühlung erforderlich, bei denen neue Düsengeometrien eingesetzt werden. Die Wechselvorgänge bei unterschiedlichen, insbesondere neuen Düsentypen sind bislang noch nicht automatisiert und erfolgen daher in der Regel manuell, da die an Laserbearbeitungsmaschinen eingesetzten Düsenwechsler üblicherweise nur Düsen mit einem Standard-Düsentyp wechseln können.

Für Drehwerkzeuge ist aus JP 61197106 A und JP 61192436 A eine treppenförmige Werkzeugaufnahmevorrichtung bekannt. Die unterschiedlich geformten Werkzeuge sind hierbei auf den verschiedenen Stufen in unterschiedlicher Höhe nebeneinander angeordnet.

In der US 3,604,565 ist ein Werkzeugmagazin beschrieben, welches eine Mehrzahl von gestuften, zylindrischen Löchern zur Aufnahme jeweils eines Werkzeughalters aufweist. Ein Werkzeughalter, der für die Aufnahme eines bestimmten Werkzeugs ausgebildet ist, kann auf der obersten Stufe des gestuften Lochs abgelegt werden.

### Aufgabe der Erfindung

Aufgabe der vorliegenden Erfindung ist es, eine Düsenaufnahme, einen Düsenwechsler mit einer Mehrzahl von Düsenaufnahmen sowie eine Laserbearbeitungsmaschine mit einem solchen Düsenwechsler bereitzustellen, mit denen eine flexible und automatisierte Handhabung und Lagerung von Düsen von unterschiedlichem Typ ermöglicht wird.

### Gegenstand der Erfindung

Diese Aufgabe wird erfindungsgemäß gelöst durch eine Düsenaufnahme wie eingangs beschrieben, bei welcher der Düsenlagerraum mindestens zwei, bevorzugt mindestens drei stufenförmig voneinander abgesetzte Düsenlagerplätze zur Ablage jeweils einer Düse umfasst und bei welcher mindestens zwei der Düsenlagerplätze, insbesondere alle Düsenlagerplätze jeweils eine umlaufende Aufnahmekontur zur formschlüssigen und somit verdrehsicheren Ablage einer Düse an dem Düsenlagerplatz aufweisen.

Der Düsenlagerraum ist im Wesentlichen trichterförmig ausgebildet, so dass innerhalb des Düsenlagerraums an den Düsenlagerplätzen mehrere Düsen unterschiedlichen Typs, d.h. mehrere Düsen mit unterschiedlicher oder unterschiedlich großer Außenkontur abgelegt und durch die Düsen-Entnahme-Öffnung automatisiert entnommen werden können. Unter der Außenkontur einer Düse wird der Verlauf des Außenumfangs der Düse senkrecht zur (zentrischen) Düsenachse verstanden, die bei in der Aufnahme abgelegter Düse mit der Düsen-Entnahme-Richtung (z-Richtung) übereinstimmen sollte. Die Außenkonturen verschiedener Düsentypen unterschieden sich in der Größe und ggf. auch in der Form.

Die Düsenlagerplätze ermöglichen das Ablegen von Düsen mit unterschiedlichen Außenkonturen (senkrecht zur Düsen-Entnahme-Richtung) und sind entlang der Düsen-Entnahme-Richtung stufenförmig voneinander abgesetzt. Die Düsenlagerplätze befinden sich somit auf verschiedenen Ebenen senkrecht zur Düsen-Entnahme-Richtung, wobei sich der Düsenlagerplatz zur Aufnahme der Düse mit dem größten Querschnitt benachbart zur Düsen-Entnahme-Öffnung des Düsenlagerraums befindet. Die Düsen werden jeweils mit ihrer Stirnfläche in der stufenförmig ausgeformten Düsenaufnahme gegen die Entnahme-Richtung in der Höhe positioniert.

Die Düsenaufnahme besteht aus einem starren Material, vorzugsweise aus Metall (z.B. Aluminium) oder verstärktem Kunststoff. Zur Verringerung der Reibung kann die Oberfläche der Düsenaufnahme eine Beschichtung aufweisen.

Zur formschlüssigen und somit verdrehsicheren Ablage einer Düse weist die Innenkontur der Düsenaufnahme (Aufnahmekontur) in einer Ebene senkrecht zur Düsen-Entnahme-Richtung Bereiche mit unterschiedlich großem radialen Abstand zu einer in Düsen-Entnahme-Richtung verlaufenden Mittelachse der Düsenaufnahme auf (d.h. ist in der Regel nicht radialsymmetrisch) und die Außenkontur der Düse ist entsprechend angepasst, so dass diese formschlüssig an der Aufnahmekontur in Anlage gebracht werden kann. Beispielsweise kann die Außenkontur der Düse an der Stelle des größten Umfangs mit geraden Flächen versehen sein und die Aufnahmekontur eine entsprechende Anzahl von geraden oder leicht nach innen gewölbten Flächen aufweisen. Dies ermöglicht einen Formschluss zwischen der abgelegten Düse und der Aufnahmekontur, der eine Drehmomentübertragung auf die Düse ermöglicht. Auf diese Weise wird die Düse bei einer Drehung der Düsenaufnahme um die Mittelachse mit rotiert, so dass die Düse an dem Laserbearbeitungskopf an- oder von diesem abgeschraubt werden kann.

Neben Laserbearbeitungsköpfen, die eine Schraubverbindung zu den entsprechenden Düsen vorsehen, kommen auch Laserbearbeitungsköpfe zum Einsatz, bei denen die Düsen angesteckt werden. In diesem Fall kann gegebenenfalls mindestens ein Düsenlagerplatz einen sich quer zur Düsen-Entnahme-Richtung erstreckenden Anschlag zur Anlage an dem Bearbeitungskopf aufweisen, um einen Einrastvorgang am Bearbeitungskopf auszulösen, so dass die Düse an den Laserbearbeitungskopf gesteckt werden kann.

Vorzugsweise weist mindestens ein solcher Düsenlagerplatz eine Klemm- und/oder Rasteinrichtung zur Erzeugung einer Haltekraft auf die Düse entgegen der Düsen-Entnahme-Richtung auf, damit die beispielsweise durch Dichtungen oder Formschlüsse im Bearbeitungskopf auf die Düse ausgeübten Kräfte beim Zurückziehen des Bearbeitungskopfes nicht zu einer Mitnahme der Düse führen, sondern die Düse sicher an dem Düsenlagerplatz gehalten wird.

Eine Klemmeinrichtung kann bspw. dadurch realisiert werden, dass der Düsenlagerplatz bzw. eine dort gebildete Aufnahmekontur einen oder mehrere sich radial nach innen erstreckende, ggf. gefederte bzw. mechanisch betätigte Vorsprünge aufweist, die in entsprechende Ausnehmungen bzw. geeignete Konturen an der Düse eingreifen können, um die Düse am Düsenlagerplatz zu fixieren.

Die Klemm- und/oder Rasteinrichtung kann zur Fixierung der Düse in dem Düsenlagerplatz auch mindestens einen quer zur Düsen-Entnahme-Richtung bewegbaren Schieber aufweisen, welcher beim Einführen der Düse gegen die Wirkung einer Rückstellkraft z.B. radial nach außen verschoben wird und eine Haltekraft erzeugt, um beim Zurückziehen des Bearbeitungskopfs die Düse am Düsenlagerplatz zu halten. Eine Entriegelung des Schiebers kann durch den Bearbeitungskopf selbst oder über eine mechanische Betätigung (beispielsweise durch einen mechanischen Antrieb) erfolgen.

Zum Aufbringen einer Haltekraft hat es sich auch als günstig erwiesen, wenn die Düsenaufnahme mindestens einen elastischen Einsatz (beispielsweise aus einem Elastomer wie NBR, FPM oder Silikon) aufweist, in dem mindestens ein Düsenlagerplatz gebildet ist. Der Einsatz kann im Wesentlichen trichterförmig ausgebildet sein und sich über den gesamten Düsenlagerraum erstrecken. Alternativ kann an jedem Düsenlagerplatz ein separater elastischer Einsatz vorgesehen sein. Beim Ablegen einer Düse am jeweiligen Düsenlagerplatz wird der elastische Einsatz in radialer Richtung (senkrecht zur Düsen-Entnahme-Richtung) nach außen gedrückt und bringt eine Spannkraft auf die Düse auf. Der elastische Einsatz kann hierbei auf jeder Ebene, d.h. im Bereich jedes Düsenlagerplatzes, die Außenkonturen der verschiedenen Düsen zumindest ansatzweise abbilden.

Die erfindungsgemäße Düsenaufnahme ermöglicht die Aufnahme von Düsen unterschiedlichen Typs (mit unterschiedlichen Außenkonturen), so dass die Düsenaufnahme flexibel eingesetzt werden kann. Die Stufenhöhen der Düsenlagerplätze bzw. der Abstand der Aufnahmeebenen kann hierbei so gewählt werden, dass jeweils nur eine einzige Düse in der Düsenaufnahme abgelegt werden kann, da zwei gleichzeitig abgelegte Düsen miteinander kollidieren würden.

Vorteilhaft ist es, wenn die Düsenaufnahme derart ausgebildet ist, dass mindestens zwei Düsen mit unterschiedlich großen und/oder unterschiedlich geformten Außenkonturen an mindestens zwei übereinander liegenden Düsenlagerplätzen abgelegt werden können. Dies kann erreicht werden, indem der Abstand der Aufnahmeebenen bzw. der Düsenlagerplätze entlang der Düsen-Entnahme-Richtung so groß gewählt bzw. so auf die räumliche Erstreckung der Düsen abgestimmt wird, dass in der Düsenaufnahme mindestens zwei Düsen übereinander abgelegt werden können.

Die Erfindung betrifft auch einen Düsenwechsler, umfassend: eine Mehrzahl von Düsenaufnahmen wie oben beschrieben, die in einer gemeinsamen Lagereinrichtung angeordnet sind. Durch die Möglichkeit, Düsen verschiedenen Typs in ein- und derselben Düsenaufnahme aufzunehmen und darüber hinaus gleichzeitig mehrere Düsen in einer einzigen Düsenaufnahme zu lagern, kann die Anzahl der benötigten Düsenaufnahmen im Düsenwechsler gegenüber aus dem Stand der Technik bekannten Düsenwechslern verringert, was zu sehr kompakten und kleinen Düsenwechslern führt, oder die Aufnahmekapazität des Düsenwechslers erhöht werden. Es versteht sich, dass der Düsenwechsler Düsenaufnahmen von unterschiedlichem Typ bzw. mit unterschiedlich ausgebildeten Düsenlagerplätzen aufweisen kann. Um den Düsenwechsel zu vereinfachen ist es aber vorteilhaft, wenn alle Düsenaufnahmen, die in dem Düsenwechsler verwendet werden, eine identische Bauart aufweisen.

Vorzugsweise sind die Düsenaufnahmen in Düsen-Entnahme-Richtung gefedert gelagert, um Positionsfehler zu kompensieren.

Eine bevorzugte Ausführungsform des erfindungsgemäßen Düsenwechslers umfasst einen Antrieb zum Erzeugen einer Drehbewegung mindestens einer Düsenaufnahme um eine in Düsen-Entnahme-Richtung verlaufende Mittelachse. Durch die Drehbewegung der Düsenaufnahme kann ein Anschrauben einer Düse an den bzw. ein Abschrauben einer Düse von dem Laserbearbeitungskopf realisiert werden. Der Antrieb kann in Form eines Motors ausgebildet sein, der über einen Zahnriemen oder Zahnräder mit einer Zahnscheibe an der Düsenaufnahme gekoppelt ist. Um den Düsenwechsler mit einem einzigen Motor betreiben zu können, ist es günstig, mindestens zwei, insbesondere alle Düsenaufnahmen des Düsenwechslers über Zahn-Riemen oder Zahnräder mit dem Motor zu koppeln. Alternativ kann auch jede Düsenaufnahmen mit einem eigenen Motor versehen werden. Für gesteckte Düsen wird der Motor nicht betätigt bzw. nicht benötigt.

Die Erfindung betrifft auch eine Laserbearbeitungsmaschine zum Bearbeiten von Werkstücken, umfassend: einen Bearbeitungskopf, der zur Befestigung einer Düse ausgebildet ist, sowie einen Düsenwechsler zur Montage und/oder Demontage einer Düse an dem Bearbeitungskopf, der wie oben beschrieben ausgebildet ist. Der Bearbeitungskopf ist vorzugsweise an der Laserbearbeitungsmaschine in und entgegen der Düsen-Entnahme-Richtung verschiebbar ausgebildet, so dass er über die Düsen-Entnahme-Öffnung in den Düsenlagerraum eingeführt werden sowie den Höhenunterschied der Düsenlagerplätze in Düsen-Entnahme-Richtung kompensieren kann. Der Bearbeitungskopf kann zur Befestigung einer Düse mit einem Gewinde versehen sein und/oder eine Rast- bzw. Klemmeinrichtung zur rastenden bzw. klemmenden Verbindung mit einer Düse aufweisen.

Weitere Vorteile der Erfindung ergeben sich aus der Beschreibung und den Zeichnungen. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1a: einen Düsenwechsler mit mehreren Düsenaufnahmen;
- Fig. 1b: einen Ausschnitt des Düsenwechslers aus Fig. 1 a;
- Fign. 2a-c: drei Düsenaufnahmen, aus denen drei verschiedene Düsen mittels eines Laserbearbeitungskopfs entnommen werden;
- Fig. 3: einen Düsenwechsler mit einem Antrieb zum Erzeugen einer Drehbewegung der Düsenaufnahmen;
- Fig. 4a-b: Schnittdarstellungen von Details des Düsenwechslers von Fig. 3; sowie
- Fig. 5: eine Laserbearbeitungsmaschine mit einem Bearbeitungskopf und einem Düsenwechsler.

**Fign**. **1a**, **1b** zeigen einen Düsenwechsler **1** mit einer Mehrzahl von Düsenaufnahmen **2** in einer Lagereinrichtung **3,** welche ein Gehäuse mit einer Abdeckung umfasst. Im gezeigten Beispiel sind drei der Düsenaufnahmen 2 mit Düsen **4a, 4b, 4c** von unterschiedlichem Typ, d.h. mit unterschiedlichen Außenkonturen, bestückt.

Jede Düsenaufnahme 2 umfasst einen gestuften Düsenlagerraum **5** mit mehreren Düsenlagerplätzen **5a, 5b, 5c,** die in jeweils unterschiedlichen Ebenen senkrecht zu einer Düsen-Entnahme-Richtung **Z** angeordnet und stufenförmig voneinander abgesetzt sind. Der Düsenlagerraum 5 weist eine Öffnung **7** auf, durch die hindurch die verschiedenen Düsen 4a, 4b, 4c dem Düsenlagerraum 5 zugeführt und aus diesem entnommen werden können. Jeder Düsenlagerplatz 5a, 5b, 5c weist im vorliegenden Beispiel eine umlaufende Aufnahmekontur **6a, 6b, 6c** auf, die zur formschlüssigen Aufnahme einer Außenkontur einer jeweiligen Düse 4a, 4b, 4c ausgebildet ist.

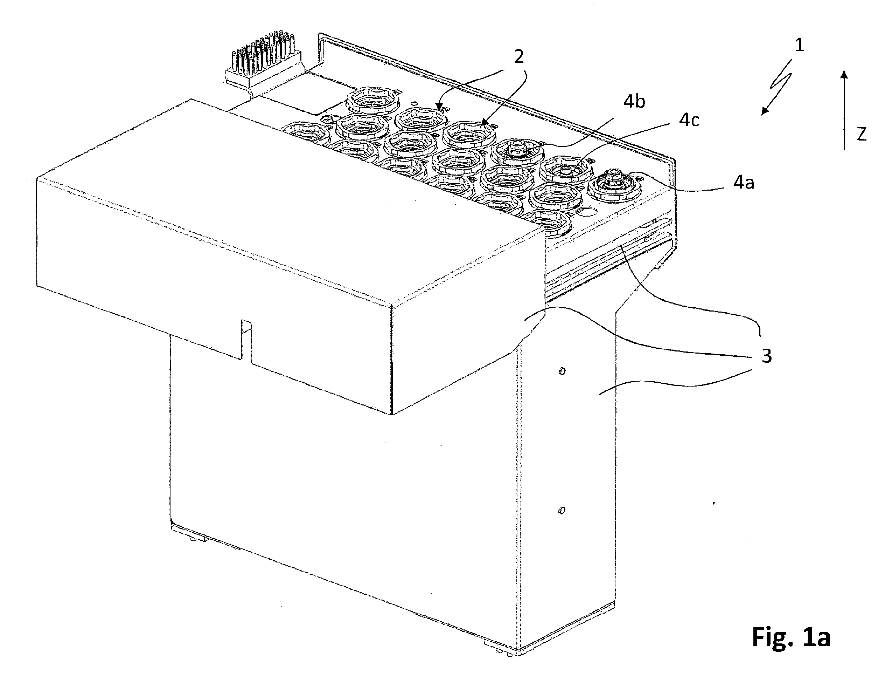

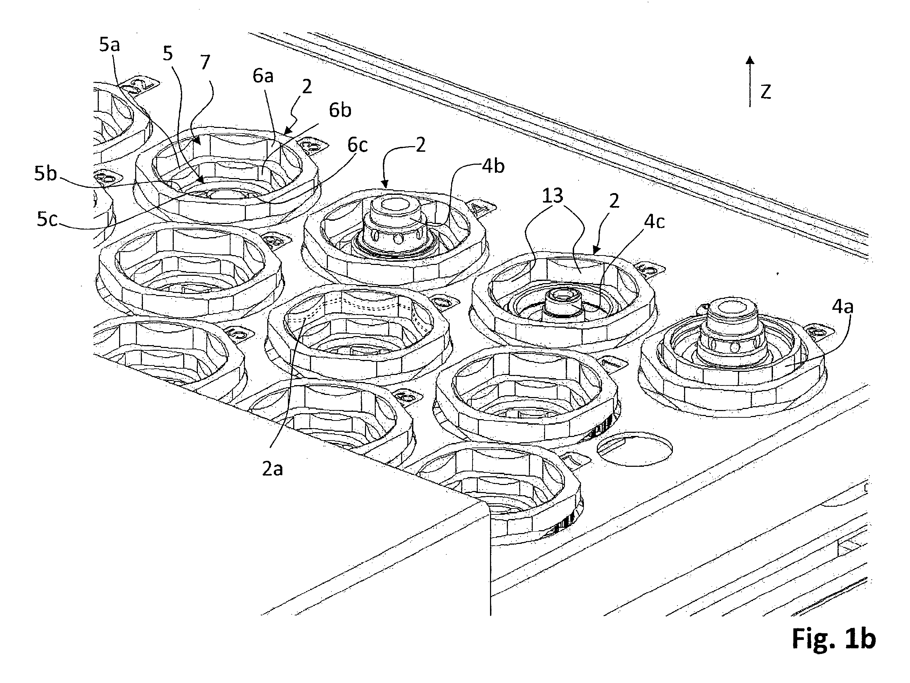

Der Düsenlagerplatz 5c zur Aufnahme einer Düse mit 4c dem kleinsten Außen-Durchmesser befindet sich zuunterst in der Düsenaufnahme 2 (also am weitesten von der Öffnung 7 entfernt). Aufsteigend sind im vorliegenden Beispiel zwei weitere Düsenlagerplätze 5a, 5b mit jeweils größerem radialem Durchmesser vorgesehen. Der Querschnitt des obersten Düsenlagerplatzes 5a bzw. der zugehörigen Aufnahmekontur 6a ist so groß gewählt, dass auch die Düse 4c, die in dem am weitesten von der Öffnung 7 entfernten Düsenlagerplatz 5c angeordnet ist, von einem (in Fign. 1a, b nicht gezeigten) Bearbeitungskopf erfasst werden kann. Somit können alle in der Düsenaufnahme 2 lagerbaren Düsen 4a-c über die Öffnung 7 ein- und wieder ausgeführt werden.

Die in der EP 2 078 584 A1 beschriebene Düsenaufnahme, die zur Aufnahme einer einzigen Düse an einem einzigen Düsenlagerplatz ausgebildet ist, wird somit um mindestens einen, insbesondere um zwei oder mehr stufenförmig abgesetzte Düsenlagerplätze ergänzt, welche die Lagerung von Düsen verschiedenen Typs auf verschiedenen Ebenen ermöglicht, wobei sich der Durchmesser der Düsenlagerplätze 5a-5c, genauer gesagt der Durchmesser der jeweiligen umlaufenden Aufnahmekontur 6a-c in Düsen-Entnahme-Richtung Z vergrößert.

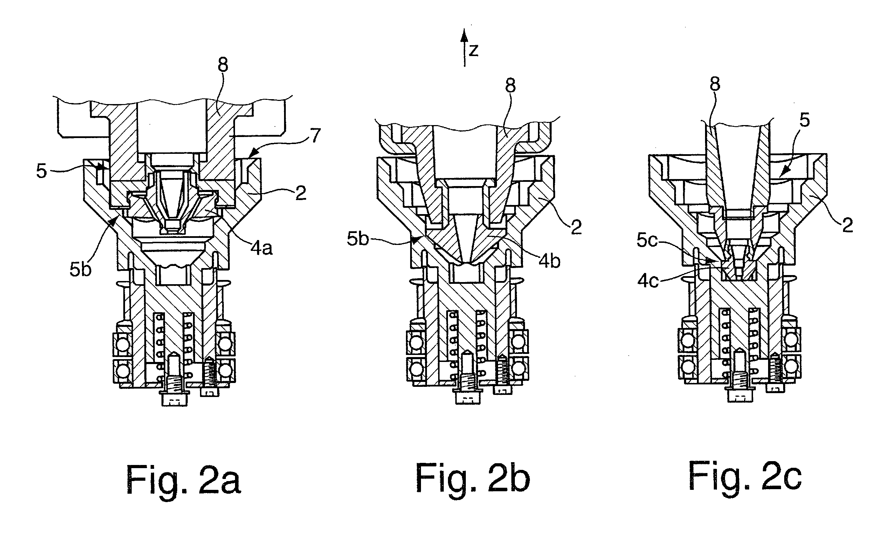

**Fign. 2a****-c** zeigen Schnittdarstellungen von drei Düsenaufnahmen 2 identischer Bauart, die jeweils mit einer Düse 4a, 4b, 4c bestückt sind, wobei die Düsen 4a, 4b, 4c unterschiedliche Außenkonturen mit unterschiedlichen Geometrien bzw. unterschiedlichem Außendurchmesser aufweisen. Entsprechend den Außenkonturen sind die verschiedenen Düsentypen in Düsenlagerplätzen 5a, 5b, 5c auf unterschiedlichen Ebenen angeordnet. Ein Bearbeitungskopf **8** kann durch die Öffnung 7 in den Düsenlagerraum 5 eingeführt werden, um eine jeweilige Düse 4a, 4b, 4c zu entnehmen. Die Niveau-Unterschiede der Düsenlagerplätze 5a-c in der Düsenaufnahme 2 werden beim Wechseln der Düsen 4a, 4b, 4c durch eine entsprechende Zustellung des Bearbeitungskopfes 8 entlang der Düsen-Entnahme-Richtung Z kompensiert.

Wenn die Düsen 4a, 4b, 4c am Bearbeitungskopf 8 mit einer Rast- oder Steckverbindung befestigt sind, so muss zur Entnahme einer Düse vom Bearbeitungskopf 8 in der Regel diese Steck-Verbindung gelöst werden. Zu diesem Zweck ist es ggf. erforderlich, dass beim Ablegen der Düse an dem Düsenlagerplatz eine entgegen der Düsen-Entnahme-Richtung Z wirkende Haltekraft (z.B. Dichtungsreibung oder Formschluss) auf die Düse wirkt, so dass beim Zurückziehen des Bearbeitungskopfs 8 die Düse an dem Düsenlagerplatz verbleibt.

Um die Haltekraft aufzubringen, kann die Düsenaufnahme 2 elastisch ausgebildet sein oder einen elastischen Einsatz **2a** aufweisen, welcher eine gestufte Innenkontur aufweist, die an jedem Düsenlagerplatz 5a-c zumindest ansatzweise die Außenkontur einer jeweiligen Düse 4a-c nachbilden sollte. Alternativ kann die Düsenaufnahme 2 an jedem Düsenlagerplatz 5a-c einen separaten Einsatz 2a aufweisen (wie in Fig. 1b beispielhaft für einen Düsenlagerplatz gezeigt ist). Durch einen solchen elastischen Einsatz 2a kann erreicht werden, dass die Düse 4a-c nach dem Lösen vom Bearbeitungskopf 8 in der Düsenaufnahme 2 verbleibt, d.h. für gesteckte Düsen wird durch den elastischen Einsatz 2a die erforderliche Haltekraft in Düsen-Entnahme-Richtung Z aufgebracht.

Fign. 2a-c zeigen Düsen 4a, 4b, 4c, welche an einem dem Bearbeitungskopf 8 zugewandten Bereich des Außenumfangs ein Außengewinde aufweisen, um in den Bearbeitungskopf 8 eingeschraubt zu werden. Ein Düsenlagerplatz 5a, 5b, 5c, welcher für eine zu verschraubende Düse 4a,4b, 4c vorgesehen ist, muss in diesem Fall nicht nur die Positionierung der Düse 4a,4b, 4c in axialer und radialer Richtung, sondern auch eine Drehmomentübertragung von der Düsenaufnahme 2 auf die Düse 4b, 4c ermöglichen. Zu diesem Zweck kann ein Formschluss zwischen einer jeweiligen Aufnahmekontur 6a-c (vgl. Fig. 1 b) eines Düsenlagerplatzes 5a-c und der jeweiligen Düse 4b-c vorgesehen werden. Ein solcher Formschluss wird beispielsweise dadurch ermöglicht, dass die Außenkontur der Düse 4a-c im Bereich ihres größten Außen-Umfangs mehrere plane Flächen aufweist und die entsprechende Aufnahmekontur 6a-c zumindest zwei gerade oder leicht nach innen gewölbte Flächen **13** aufweist (vgl. Fig. 1 b), um die Düse 4a-c verdrehsicher aufnehmen zu können. Bei dem in Fign. 1a, b gezeigten Beispiel weisen die aufzunehmenden Düsen 4a-c einen Außensechskant und die Aufnahmekonturen 6a-c an den jeweiligen Düsenlagerplätzen 5a-c einen Innensechskant auf, dessen Durchmesser sich bei den unterschiedlichen Düsenlagerplätzen 5a-c voneinander unterscheidet. Alternativ können die Düsen leicht nach außen gewölbte Flächen und die Düsenaufnahme mehrere plane Flächen aufweisen, etc.

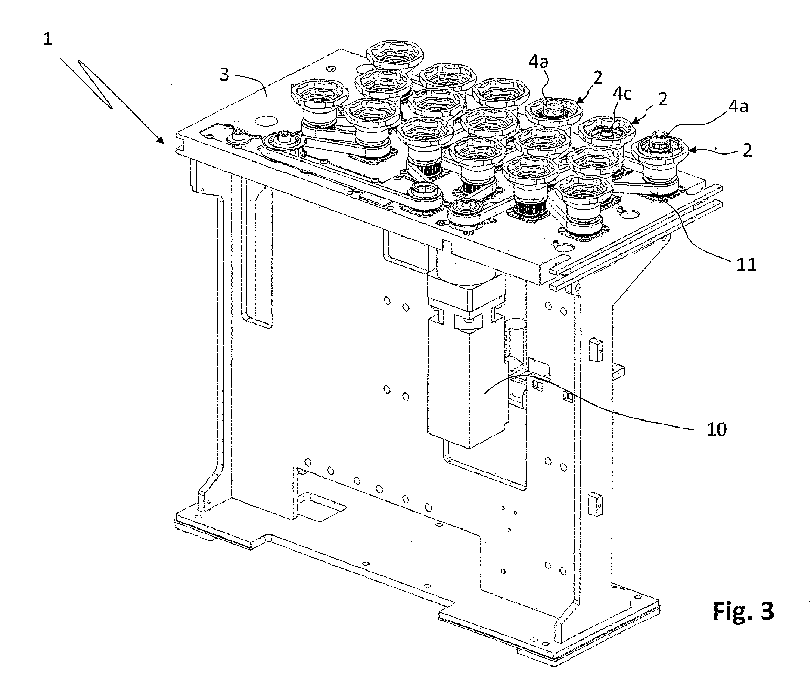

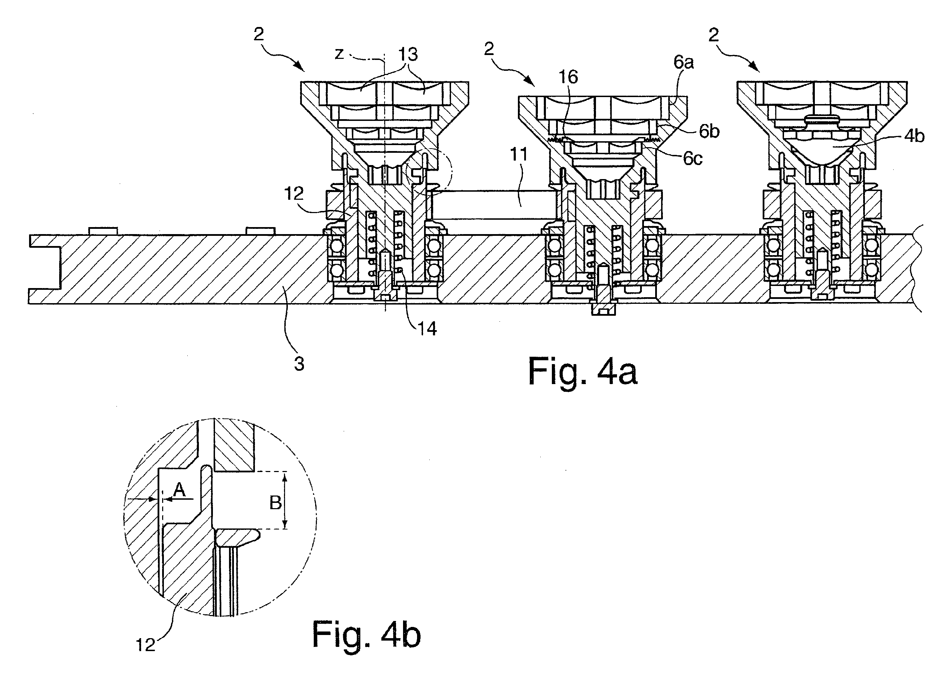

Ein Düsenwechsler 1, der das Anschrauben von Düsen 4a-c an einem Bearbeitungskopf ermöglicht, ist in **Fig. 3** gezeigt. Innerhalb des Düsenwechslers 1 sind die Düsenaufnahmen 2 auf einer Basisplatte montiert, welche Teil der Lagereinrichtung 3 ist. Als Antrieb zur Erzeugung einer Drehbewegung dient ein Motor **10,** der ein Zahnriemen **11** antreibt, der um Zahnscheiben **12** (vgl. **Fig. 4a**) herum verläuft. Die Zahnscheiben 12 weisen einen formschlüssigen Durchbruch auf, in welche die Düsenaufnahme 2 eingesetzt ist, um diese gemeinsam mit der Zahnscheibe 12 um eine Mittelachse z der Düsenaufnahme 2 zu drehen. Durch die verdrehsichere Lagerung wird das Drehmoment von der Düsenaufnahme 2 auf die Düsen 4a, 4c übertragen.

In radialer Richtung besteht ein Spiel **A** innerhalb der Zahnscheibe 12, genauer gesagt zwischen der Zahnscheibe 12 und der von dieser mitgenommenen Düsenaufnahme 2 (**Fig. 4b**). Auf diese Weise kann ein leichter Positionsversatz zwischen Bearbeitungskopf und Düsenaufnahme beim Schraubvorgang ausgeglichen werden.

Die Düsenaufnahme 2 ist zudem in Richtung der Mittenachse z zur Positionsfehler-Kompensation gefedert gelagert (Spiel **B**), im vorliegenden Beispiel mittels einer Spiralfeder **14.**

Beim Anschrauben einer Düse 4a-c an den Bearbeitungskopf 8 wird die Düsenaufnahme 2 angetrieben rotiert, wobei sich die Düse 4a-c aufgrund des Spiels A, B in mehreren Achsrichtungen an das Gewinde des Bearbeitungskopfes 8 anpassen kann, so dass ein Verkanten und "Anfressen" der Düse 4a-c verhindert wird.

Bei der Verwendung eines elastischen Einsatzes 2a in der Düsenaufnahme 2 kann ggf. sowohl das radiale Spiel A als auch das Spiel B in Richtung der Mittenachse ohne weitere Hilfsmittel realisiert werden, so dass z.B. auf das Vorsehen einer Spiralfeder verzichtet werden kann. Für gesteckte Düsen kann zusätzlich durch den elastischen Einsatz 2a die Haltekraft gegen die Düsen-Entnahme-Richtung Z aufgebracht werden.

Eine zusätzliche oder alternative Möglichkeit zur Verwendung eines elastischen Einsatzes 2a, um eine Haltekraft entgegen der Düsen-Entnahme-Richtung Z zu realisieren, besteht darin, an den Düsenlagerplätzen 5a-c der Düsenaufnahme 2 gefederte oder mechanisch (z.B. pneumatisch) betätigte Schieber **16** vorzusehen, die beim Einsetzen einer Düse 4a-c radial nach außen gedrückt werden und auf diese Weise die Düse 4a-c am jeweiligen Düsenlagerplatz 5a-c einspannen bzw. verriegeln. Alternativ kann mittels einer geeigneten Sensorik die Anwesenheit einer Düse detektiert und durch eine Maschinensteuerung ein mechanisches (z.B. pneumatisches) Verriegelungselement betätigt werden.

Es versteht sich, dass der Düsenwechsler 1 zusätzlich mit weiteren Düsenaufnahmen ausgestattet sein kann, die nicht rotiert werden können. Falls nur Düsen gewechselt werden sollen, die an dem Bearbeitungskopf 8 durch eine Steckverbindung befestigt werden, kann auf einen Antrieb zur Rotation der Düsenaufnahmen 2 um ihre Mittenachse z verzichtet werden.

Durch die unterschiedlich ausgestalteten Düsenlagerplätze 5a-c innerhalb einer Düsenaufnahme 2 ist die Lagerung von unterschiedlichen Düsentypen in ein- und derselben Düsenaufnahme 2 möglich. Dabei besteht einerseits die Möglichkeit, jeweils nur eine einzige der unterschiedlichen Düsen in einer Düsenaufnahme 2 abzulegen, was einen direkten Zugriff auf alle abgelegten Düsen 4a, 4b, 4c ermöglicht. Gegebenenfalls können mehreren Düsen 4a, 4b, 4c übereinander in derselben Düsenaufnahme 2 abgelegt werden, wodurch sich die Anzahl der Düsenaufnahmen 2 für eine zu lagernde Düsenanzahl verringert. Diese Art der Lagerung erfordert jedoch eine spezielle Be- und Entladestrategie.

Im letzteren Fall ist der Abstand der Düsenlagerplätze 5a-c in Düsen-Entnahme-Richtung Z geeignet an die Ausdehnung der abzulegenden Düsen 4a, 4b, 4c in Düsen-Entnahme-Richtung Z anzupassen, d.h. die Stufenhöhe innerhalb des Düsenlagerraums 5 (Abmessung der Düsenlagerplätze 5a-c in Düsen-Entnahme-Richtung Z) sollte geeignet gewählt sein.

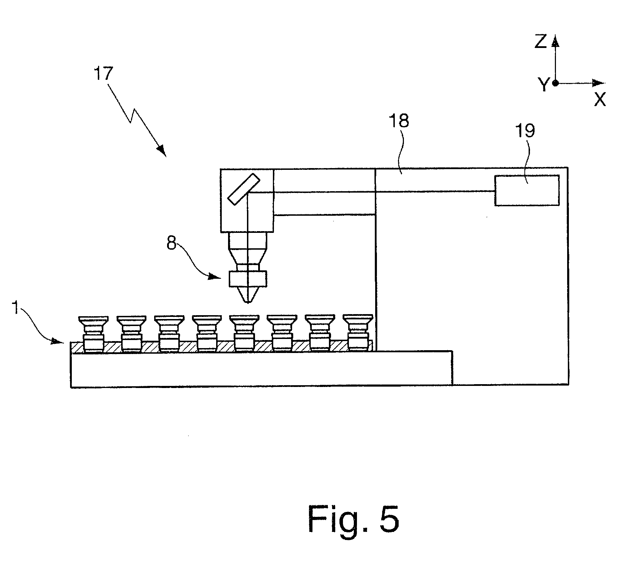

**Fig. 5** zeigt den erfindungsgemäßen Düsenwechsler 1 in einer Laserbearbeitungsmaschine **17,** welche einen ortsfesten Maschinenkörper **18** und einen Bearbeitungskopf 8 aufweist, der in drei Raumrichtungen X,Y,Z relativ zum Maschinenkörper 18 bewegbar ist. Der Düsenwechsler 1 befindet sich im Randbereich des Bearbeitungsraumes oder kann in den Bearbeitungsraum eingeschwenkt bzw. eingefahren werden. Die Laserbearbeitungsmaschine 17 weist auch eine Laserstrahlquelle **19** auf, über die ein in Fig. 5 angedeuteter Laserstrahl auf ein (nicht gezeigtes) Werkstück gerichtet werden kann. Es versteht sich, dass die Laserquelle 19 während des Düsenwechsels nicht aktiv ist.

Zusammenfassend weist die hier beschriebene Düsenaufnahme 2 einen gestuften Düsenlagerraum 5 auf, der sich zur Düsen-Entnahme-Öffnung 7 hin aufweitet. Die einzelnen Stufen bzw. Ablageebenen innerhalb des Düsenlagerraums 5 bilden je einen Düsenlagerplatz 5a-c. Die Innenkontur (Aufnahmekontur 6a-c) eines Düsenlagerplatzes 5a-c ist hierbei günstiger Weise an die Außenkontur eines bestimmten Düsentyps angepasst, der für jeden Düsenlagerplatz 5a-c unterschiedlich ist. Die erfindungsgemäße Düsenaufnahme 2 kann daher zur Lagerung und insbesondere zum Austausch verschiedener Düsentypen mit unterschiedlicher Außenkonturform und/oder -größe verwendet werden.

## Patentansprüche

1. Düsenaufnahme (2) für einen Düsenwechsler (1) zur Montage und/oder zur Demontage von Düsen (4a, 4b, 4c) an einem Bearbeitungskopf (8) einer Laserbearbeitungsmaschine (17), umfassend:
einen Düsenlagerraum (5), der sich in einer Düsen-Entnahme-Richtung (Z) zu einer Düsen-Entnahme-Öffnung (7) hin erweitert,
**dadurch gekennzeichnet,**
**dass** der Düsenlagerraum (5) mindestens zwei stufenförmig voneinander abgesetzte Düsenlagerplätze (5a, 5b, 5c) zur Ablage jeweils einer Düse (4a, 4b, 4c) umfasst und
**dass** mindestens zwei der Düsenlagerplätze (5a, 5b, 5c) jeweils eine umlaufende Aufnahmekontur (6a, 6b, 6c) zur verdrehsicheren Ablage einer Düse (4a, 4b, 4c) aufweisen.

2. Düsenaufnahme (2) nach einem der vorhergehenden Ansprüche, bei welcher mindestens ein Düsenlagerplatz (5a, 5b, 5c) eine Klemm- und/oder Rasteinrichtung (16) zum Erzeugen einer Haltekraft entgegen der Düsen-Entnahme-Richtung (Z) aufweist.

3. Düsenaufnahme (2) nach Anspruch 2, bei welcher die Klemm- und/oder Rasteinrichtung mindestens einen quer zur Düsen-Entnahme-Richtung (z) gegen die Wirkung einer Rückstellkraft bewegbaren Schieber (16) aufweist.

4. Düsenaufnahme (2) nach einem der vorhergehenden Ansprüche, bei welcher die Düsenaufnahme mindestens einen elastischen Einsatz (2a) aufweist, in dem mindestens ein Düsenlagerplatz (5a,5b,5c) gebildet ist.

5. Düsenaufnahme (2) nach einem der vorhergehenden Ansprüche, weiter umfassend: mindestens zwei Düsen (4a, 4b, 4c), die an mindestens zwei unterschiedlichen Düsenlagerplätzen (5a, 5b, 5c) übereinander abgelegt sind.

6. Düsenwechsler (1), umfassend: eine Mehrzahl von Düsenaufnahmen (2) nach einem der vorhergehenden Ansprüche, die in einer gemeinsamen Lagereinrichtung (3) angeordnet sind.

7. Düsenwechsler (1) nach Anspruch 6, bei dem die Düsenaufnahmen (2) in Düsen-Entnahme-Richtung (z) gefedert gelagert sind.

8. Düsenwechsler nach Anspruch 6 oder 7, weiter umfassend: einen Antrieb (10) zum Erzeugen einer Drehbewegung mindestens einer Düsenaufnahme (2) um eine in Düsen-Entnahme-Richtung (Z) verlaufende Mittenachse (z).

9. Laserbearbeitungsmaschine (17) zum Bearbeiten von Werkstücken, umfassend:
einen Bearbeitungskopf (8), der zur Befestigung einer Düse (4a, 4b, 4c) ausgebildet ist, sowie einen Düsenwechsler (1) nach einem der Ansprüche 6 bis 8 zur Montage und/oder Demontage einer Düse (4a, 4b, 4c) an dem Bearbeitungskopf (8).

## Claims

1. A nozzle holder (2) for a nozzle changer (1) for mounting and/or demounting nozzles (4a, 4b, 4c) on a processing head (8) of a laser processing machine (17), comprising:
a nozzle storage chamber (5), which widens in a nozzle removal direction (Z) to a nozzle removal opening (7),
**characterized in that**
the nozzle storage chamber (5) comprises at least two nozzle storage locations (5a, 5b, 5c) offset in steps from each other, for storing a respective nozzle (4a, 4b, 4c) and
that at least two of the nozzle storage locations (5a, 5b, 5c) each have a circumferential receiving contour (6a, 6b, 6c) for storing a nozzle (4a, 4b, 4c) in a manner secure against rotation.

2. The nozzle holder (2) according to any one of the preceding claims, in which at least one nozzle storage location (5a, 5b, 5c) has a clamping and/or snap-in locking device (16) for producing a holding force iri a direction opposite to the nozzle removal direction (Z).

3. The nozzle holder (2) according to claim 2, in which the clamping and/or snap-in locking device has at least one slide member (16) that is movable transversely to the nozzle removal direction (Z) against the action of a restoring force.

4. The nozzle holder (2) according to any one of the preceding claims, in which the nozzle holder has at least one resilient insert (2a), in which at least one nozzle storage location (5a, 5b, 5c) is formed.

5. The nozzle holder (2) according to any one of the preceding claims, further comprising: at least two nozzles (4a, 4b, 4c) that are placed one above the other at at least two different nozzle storage locations (5a, 5b, 5c).

6. A nozzle changer (1) comprising: a plurality of nozzle holders (2) according to any one of the preceding claims, which are arranged in a common storage device (3).

7. The nozzle changer (1) according to claim 6, in which the nozzle holders (2) are spring-mounted in the nozzle removal direction (Z).

8. The nozzle changer according to claim 6 or 7, further comprising: a drive (10) for producing a rotational movement of at least one nozzle holder (2) about a centre line (z) running in the nozzle removal direction (Z).

9. A laser processing machine (17) for processing workpieces, comprising: a processing head (8), which is designed for fastening a nozzle (4a, 4b, 4c), and a nozzle changer (1) according to any one of claims 6 to 8 for mounting and/or demounting a nozzle (4a, 4b, 4c) on the processing head (8).

## Revendications

1. Réceptacle de buses (2) pour un changeur de buses (1) destiné au montage et/ou au démontage de buses (4a, 4b, 4c) sur une tête d'usinage (8) d'une machine d'usinage au laser (17),
comprenant un espace (5) de stockage de buses qui, dans une direction (Z) de prélèvement de buses, s'élargit vers une ouverture (7) de prélèvement de buses, **caractérisé en ce que** l'espace (5) de stockage de buses comprend aux moins deux emplacements (5a, 5b, 5c) de stockage de buses, qui sont étagés l'un par rapport à l'autre de manière échelonnée et qui sont destinés à recevoir chacun une buse (4a, 4b, 4c),
et **en ce qu'**au moins deux des emplacements (5a, 5b, 5c) de stockage de buses présentent chacun un contour de réception entourant (6a, 6b, 6c) pour recevoir une buse (4a, 4b, 4c) de manière bloquée en rotation.

2. Réceptacle de buses (2) selon la revendication 1, dans lequel au moins un emplacement (5a, 5b, 5c) de stockage de buses présente un dispositif (16) de serrage et/ou d'enclenchement pour produire une force de maintien à l'encontre de la direction (Z) de prélèvement de buses.

3. Réceptacle de buses (2) selon la revendication 2, dans lequel le dispositif de serrage et/ou d'enclenchement présente au moins un coulisseau (16) pouvant être déplacé transversalement à la direction (Z) de prélèvement de buses à l'encontre de l'action d'une force de rappel.

4. Réceptacle de buses (2) selon l'une des revendications précédentes, dans lequel le réceptacle de buses présente au moins un élément d'insertion élastique (2a) dans lequel est formé au moins un emplacement (5a, 5b, 5c) de stockage de buses.

5. Réceptacle de buses (2) selon l'une des revendications précédentes, comprenant en outre au moins deux buses (4a, 4b, 4c), qui sont rangées en superposition dans au moins deux emplacements différents (5a, 5b, 5c) de stockage de buses.

6. Changeur de buses (1), comprenant une pluralité de réceptacles de buses (2) selon l'une des revendications précédentes, qui sont disposés dans un dispositif de stockage commun (3).

7. Changeur de buses (1) selon la revendication 6, dans lequel les réceptacles de buses (2) sont montés sur ressorts dans la direction (Z) de prélèvement de buses.

8. Changeur de buses (1) selon la revendication 6 ou 7, comprenant en outre un entraînement (10) pour produire un mouvement de rotation d'au moins un réceptacle de buses (2) autour d'un axe médian (z) s'étendant dans la direction (Z) de prélèvement de buses.

9. Machine d'usinage au laser (17) pour l'usinage de pièces, comprenant une tête d'usinage (8) qui est conçue pour y fixer une buse (4a, 4b, 4c), et comprenant un changeur de buses (1) selon l'une des revendications 6 à 8 pour le montage et/ou le démontage d'une buse (4a, 4b, 4c) sur la tête d'usinage (8).
